(19) Europäisches Patentamt
European Patent Office
Office européen des brevets

(11) **EP 3 474 057 A1**

(12) **EUROPEAN PATENT APPLICATION**
published in accordance with Art. 153(4) EPC

(43) Date of publication:
**24.04.2019 Bulletin 2019/17**

(51) Int Cl.:
***G02B 13/02*** *(2006.01)*

(21) Application number: **17815415.9**

(22) Date of filing: **20.06.2017**

(86) International application number:
**PCT/JP2017/022755**

(87) International publication number:
**WO 2017/221947 (28.12.2017 Gazette 2017/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **21.06.2016 JP 2016122594**

(71) Applicant: **Nittoh Inc.
Suwa-shi, Nagano 392-0131 (JP)**

(72) Inventor: **SAWAMOTO, Akira
Suwa-shi, Nagano 392-0021 (JP)**

(74) Representative: **Körber, Martin Hans
Mitscherlich PartmbB
Patent- und Rechtsanwälte
Sonnenstrasse 33
80331 München (DE)**

(54) **IMAGE-CAPTURING OPTICAL SYSTEM AND IMAGE-CAPTURING DEVICE**

(57) An optical system (10) consists of a first lens group (G1) that has overall positive refractive power and is disposed on an object side (11) of an aperture stop (St), and a second lens group (G2) that has overall negative refractive power and is disposed on an image plane side (12) of the aperture stop. The first lens group (G1) includes a first negative lens (L1) that is concave on the object side and is disposed closest to the object side, and a first meniscus lens (L2) with positive refractive power that is convex on the object side and is disposed adjacent to the first negative lens (L1), wherein the radius of curvature R1 of an object-side surface of the first negative lens (L1) and the focal length f of the optical system satisfy the condition (1) below.

$$-1.5 < R1/f < -0.6 \ldots (1)$$

Fig. 1

**Description**

Technical Field

The present invention relates to an optical system for image capture that can be favorably used in an image capture apparatus, such as a camera.

Background Art

Japanese Laid-open Patent Publication No. 2015-194714 discloses the provision of a unifocal image capture optical system that has a low F number, is bright and compact, and suppresses the occurrence of various aberrations, and it discloses a lens barrel, an interchangeable lens apparatus, and a camera system. The optical system includes, in order from the object side to the image side, a front group composed of a plurality of lens elements, an aperture stop, and a rear group composed of a plurality of lens elements. The front group includes, in order from the object side to the image side, a lens element with negative refractive power, a lens element with negative refractive power, and a lens element with positive refractive power, and further includes a lens element with positive refractive power that is closest to the image side. The rear group includes a focusing lens group, which is composed of at least one lens element and moves along the optical axis during focusing from an infinity-focused state to a nearby-object focused state, and a lens element with negative refractive power that is closest to the image side.

Summary of Invention

Large image capture elements are starting to be used in image capture apparatuses, such as cameras, resulting in demand for an image-capture lens system (optical system) that has a large image circle so as to be compatible with a large image capture element. In an optical system with a large image circle, especially an optical system with a large angle of view, there is a tendency for the lens size to become large and the back focus to be relatively short. For this reason, the present invention has an object of realizing an optical system with a large image circle that has a simple configuration, a small lens diameter, and a compact size.

An aspect of the present invention is an optical system for image capture that consists of: a first lens group that has overall positive refractive power and is disposed on an object side with respect to an aperture stop; and a second lens group that has overall negative refractive power and is disposed on an image plane side with respect to the aperture stop. The first lens group includes a first negative lens that is concave on the object side and is disposed most toward the object side, and a first meniscus lens with positive refractive power that is convex on the object side and is disposed adjacent to the first negative lens, and a radius of curvature R1 of an object-side surface of the first negative lens and a focal length f of the optical system satisfy the condition (1) below.

$$-1.5 < R1/f < -0.6 \quad \dots (1)$$

This optical system as a whole adopts not a retrofocus-type, which has a negative-positive power arrangement used in a wide-angle lens or the like, but a telephoto type (or "reverse retrofocus type") that has a compact configuration and has a positive-negative power arrangement which typically has a narrow angle of view. However, the angle of view is increased by using a negative lens that is concave on the object side as the first (leading) lens that is disposed most toward (closest to) the object side. Meanwhile, by taking advantage of the long focal length which is a characteristic advantage of telephoto type systems, it is possible to realize a relatively long back focus. To widen the angle of view, it is preferable for the radius of curvature R1 of the object-side surface of the first negative lens to be small. However, since the angle of the incident light greatly changes, aberration correction becomes difficult. On the other hand, if the absolute value of the radius of curvature R1 is large, the lens diameter required to achieve a wide angle system becomes large, meaning that a compact optical system cannot be provided. In this optical system, by disposing the first meniscus lens with positive refractive power that is convex on the object side adjacent to the first negative lens, it is possible to produce a configuration which is a retrofocus type where the two lenses on the object side have negative and positive refractive power and which is suited to a wide-angle lens, and to realize an optical system with a small lens diameter and a large angle of view where aberration correction is performed and the range of the radius of curvature R1 is set within the range of the condition (1).

Below the lower limit of the condition (1), the absolute value of the radius of curvature R1 increases and the lens diameter becomes large, and since the refractive power falls, it becomes difficult to correct curvature of field and spherical aberration. Also, if the upper limit of the condition (1) is exceeded, the absolute value of the radius of curvature R1 becomes too small, so that it becomes difficult to correct curvature of field, spherical aberration, and distortion. The lower limit of the condition (1) may be -1.3 or may be -1.25, and the upper limit may be -0.8 or may be -1.0.

The first lens group may consist of the first negative lens, the first meniscus lens, and a first combination with overall positive refractive power that is disposed facing the aperture stop and composed of two lenses that are positive and negative or negative and positive. By constructing the first lens group with a minimum configuration composed of a configuration suited to a wide-angle lens where the two lenses on the object side have negative and positive refractive power and a first combination lens suited to correction of chromatic aberration, it is possible to provide an optical system which is simple and compact and has favorable aberration correction.

The second lens group may include a second combination with overall positive refractive power that is disposed facing the aperture stop and composed of two lenses that are negative and positive or positive and negative so as to be symmetrical with the first combination. By disposing the second combination lens with a configuration that is symmetrical to the first combination lens on the other side of the aperture stop, it is possible to provide an optical system which is simple and compact and has favorable aberration correction.

The second lens group may include, in order starting from the image plane side, a meniscus lens with negative refractive power that is convex on the image plane side and a meniscus lens with negative refractive power that is convex on the object side. By disposing two lenses with negative refractive power on the image capture side, it is possible to achieve a sufficient back focus length, and by combining meniscus lenses with different surface orientations, it is possible to lower the Petzval sum and reduce the field of curvature while providing the required number of lens surfaces for aberration correction.

The second lens group may consist of five lenses including a second combination composed of two lenses that are positive and negative or negative and positive, a lens with positive refractive power that is convex on the image plane side, a meniscus lens with negative refractive power that is convex on the object side, and a meniscus lens with negative refractive power that is convex on the image plane side, so that including the first lens group, the optical system may consist of nine lenses.

In this optical system, during focusing, the first lens group, the aperture stop, and the second lens group may integrally move with respect to the image plane without changing the distances (air gaps) in between, which makes it possible to simplify the focusing mechanism.

An overall length of the optical system LA and the back focus BF may satisfy the condition (2) below. It is possible to provide an optical system for image capture that is compact and has a small overall length relative to the back focus length.

$$1.5 < LA/BF < 2.5 \ \dots \ (2)$$

The lower limit of the condition (2) may be 1.6, and the upper limit may be 2.3.

It is also possible to provide the optical system for image capture where the effective diameter De1 of the object-side surface of the first negative lens closest to the object side and the back focus BF satisfy the condition (3) below and the lens diameter is small relative to the back focus length.

$$0.6 < De1/BF < 1.5 \ \dots \ (3)$$

The lower limit of the condition (3) may be 0.8, and the upper limit may be 1.3 or may be 1.1.

Another aspect of the present invention is an image capture apparatus including the optical system described above and an image capture element disposed on the image plane side of the optical system. The optical system may be an interchangeable lens and the image capture apparatus may include a digital camera, a video camera, a TV camera and an action camera. Since it is possible to provide the optical system with relatively large-aperture and compact size, it is possible to miniaturize the image capture apparatus.

Brief Description of Drawings

FIG. 1 depicts an overview of an image capture apparatus including an optical system for image capture.
FIG. 2 depicts lens data of the optical system shown in FIG. 1.
FIG. 3 depicts focal lengths of the optical system shown in FIG. 1.
FIG. 4 depicts various aberrations of the optical system shown in FIG. 1.
FIG. 5 depicts transverse aberrations of the optical system shown in FIG. 1.
FIG. 6 depicts an overview of an image capture apparatus including a different optical system for image capture.
FIG. 7 depicts lens data of the optical system shown in FIG. 6.
FIG. 8 depicts focal lengths of the optical system shown in FIG. 6.
FIG. 9 depicts various aberrations of the optical system shown in FIG. 6.
FIG. 10 depicts transverse aberrations of the optical system shown in FIG. 6.

Detail description

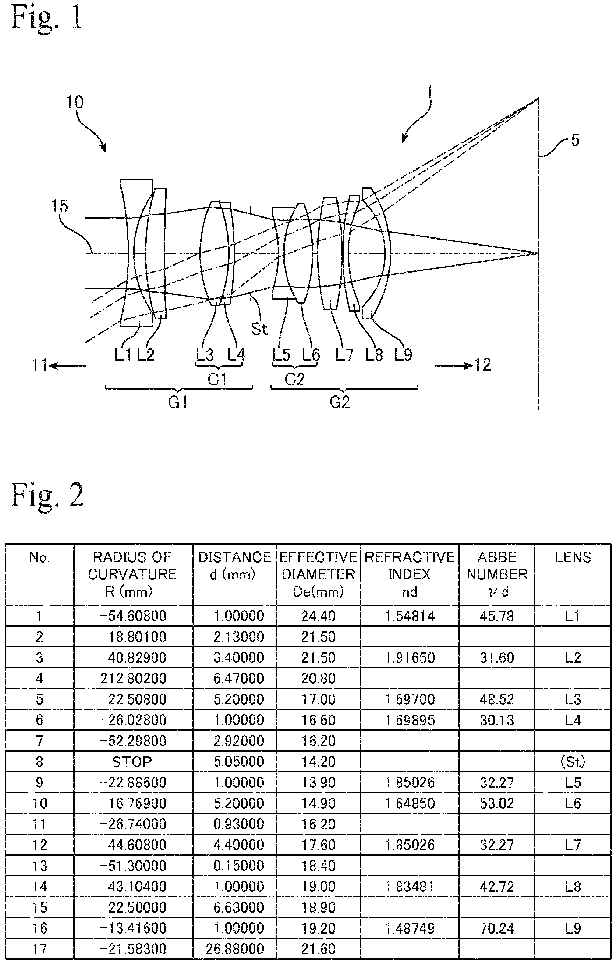

FIG. 1 depicts an example of an image capture apparatus (image capture device, camera, camera apparatus) with an optical system for image capture. The camera 1 includes an optical system (image capture optical system, image-forming optical system, lens system) 10 and an image capture element (image capture device) 5 disposed on the image plane side (image side, image capture side, image forming side) 12 of the optical system 10. The optical system 10 consists of a first lens group G1, which has overall positive refractive power and is disposed on the object side 11 with respect to an aperture stop (stop) St, and a second lens group G2, which has overall negative refractive power and is disposed on the image plane side 12 with respect to the aperture stop St. The first lens group G1 has a four-lenses configuration and includes, along the optical axis 15 in order from the object side 11, a biconcave negative lens (first negative lens) L1, a meniscus lens (first meniscus lens) L2 with positive refractive power that is convex on the object side 11, a biconvex positive lens L3, and a negative meniscus lens L4 that is convex on the image plane side 12. The combination (first combination of lenses) C1 composed of the positive lens L3 and the negative meniscus lens L4 is a cemented lens and is disposed facing the aperture stop St. The meniscus lens L2 that has positive refractive power is disposed adjacent to the negative lens L1 so that part of the object side 11 of the meniscus lens L2 is disposed within the concave portion on the image plane side of the biconcave negative lens L1. In this example, the first lens group G1 consists of four lenses with a symmetrical power arrangement of negative, positive, positive, and negative refractive powers.

The second lens group G2 has a five-lenses configuration and includes, along the optical axis 15 in order from the object side 11, a biconcave negative lens L5, a biconvex positive lens L6, a biconvex positive lens L7, a meniscus lens L8 with negative refractive power that is convex on the object side 11, and a meniscus lens L9 with negative refractive power that is convex on the image plane side 12. The combination (second combination of lenses) C2 composed of the negative lens L5 closest to the object side 11 and the positive lens L6 is a cemented lens and is disposed facing the aperture stop St. In this example, the second lens group G2 consists of five lenses with a relatively symmetrical power arrangement of negative, positive, positive, negative, and negative refractive powers.

In the optical system 10, during focus adjustment (focusing), the entire optical system, that is, the first lens group G1, the aperture stop St, and the second lens group G2 that are disposed in order from the object side 11, integrally moves with respect to the image plane (that is the image capture element) 5 without changing the air gaps between the group G1, the stop St, and the group G2. The optical system 10 has the first lens group G1, which has negative, positive, positive, and negative refractive powers, and the second lens group G2, which has negative, positive, positive, negative, and negative refractive powers, disposed with the aperture stop St in between, where the first lens group G1 and the second lens group G2 are disposed either side of the aperture stop St, these two lens groups G1 and G2 have symmetrical power arrangements respectively, and the optical system 10 has a total nine lenses configuration.

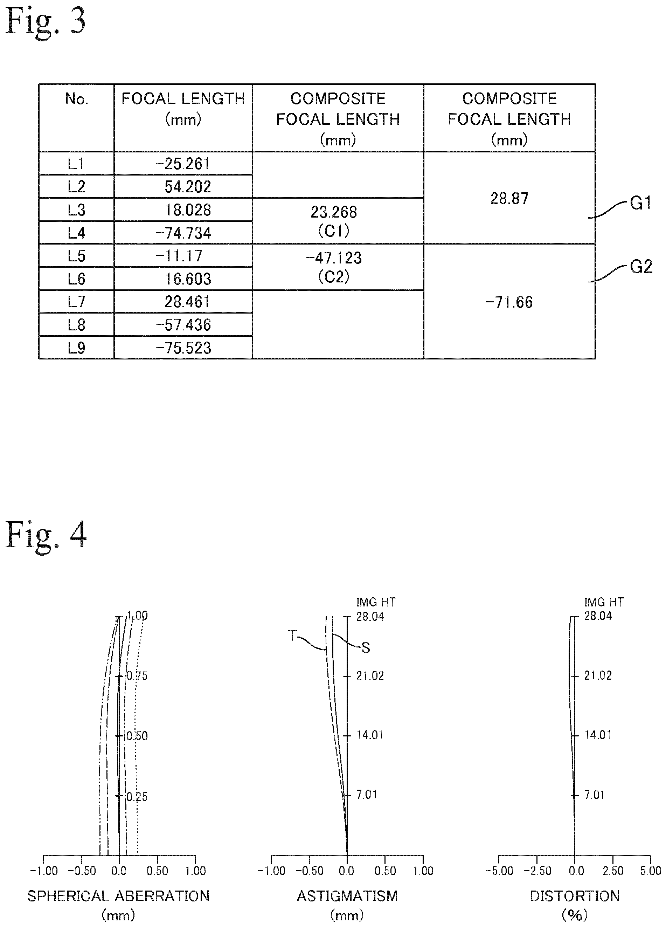

FIG. 2 shows data on the respective lenses that construct the optical system 10. "Radius of Curvature (R)" indicates the radius of curvature (in mm) of the respective surfaces of the respective lenses disposed in order from the object side 11, "Distance d" indicates the distance (in mm) between the respective lens surfaces, "Effective Diameter De" indicates the effective diameter (in mm) of each lens surface, "Refractive Index nd" indicates the refractive index (d line) of each lens, and "Abbe number vd" indicates the Abbe number (d line) of each lens. Note that the final distance, in the present embodiment "d17", indicates the distance (back focus BF) between the optical system 10 and the image capture device 5. FIG. 3 shows, based on the d line, the focal length (mm) of each lens, the composite focal length (mm) of each combination lens (cemented lens), and the composite focal lengths (mm) of respective lens groups. This is also the case for the lens data given later. Note that focal lengths and the like in the present embodiment are found at the d line.

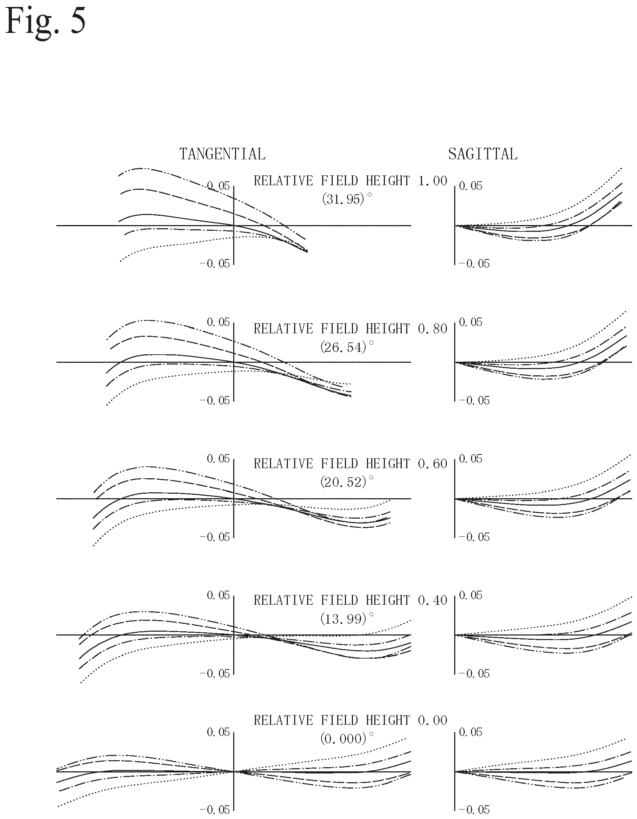

FIG. 4 depicts spherical aberration, astigmatism, and distortion of the optical system 10. Spherical aberration is depicted for a wavelength of 435.8340nm (dot-dot-dash line), a wavelength of 486.1330nm (long dash line), a wavelength of 546.0740nm (solid line), a wavelength of 587.5620nm (dot-dash line), and a wavelength of 656.2730nm (short dash line). Astigmatism is depicted for tangential rays T and sagittal rays S. In FIG. 5, chromatic aberrations of magnification (transverse aberrations) of the optical system 10 are shown for tangential rays and sagittal rays at the respective wavelengths given above. This also applies to the aberration diagrams given later.

Numerical values indicating the main performance of the optical system 10 are given below.

Overall composite focal length (f): 45.027 mm
F number: 3.5
Maximum angle of view (half-angle): 32.6 degrees
Image circle: φ56 mm
Back focus (BF): 26.88 mm
Overall lens length (LA): 47.48 mm

The image capture optical system 10 is a telephoto type (inverse retrofocus type) optical system with a positive-negative power arrangement where the first lens group G1 with positive refractive power, the stop St, and the second lens group G2 with negative refractive power are disposed in that order from the object side 11, which is typically a lens type where the focal length can be increased but the angle of view is small. With the optical system 10 however, the angle of view is widened by making the lens L1 which is leading and closest to the object side 11, a negative lens that is concave on the object side 11, and by utilizing the long focal length which is a characteristic advantage of telephoto-type systems, the optical system 10 with a large angle of view and a relatively long back focus BF is provided.

In addition, by disposing the first meniscus lens L2 that has positive refractive power and is convex on the object side 11 adjacent to the first negative lens L1 that is closest to (most toward) the object side 11, the optical system 10 where a retrofocus-type configuration with negative and positive powers that is suited to a wide-angle lens is produced by the two lenses on the object side 11, where aberration correction is performed, where the radius of curvature R1 is set within the range of the condition (1), and where the angle of view is large with a half-angle of 32.6° with a small lens diameter is realized.

In addition, the optical system 10 has a large image circle diameter of 56mm corresponding to a large-sized image capture element 5, has a long back focus BF at 26.88mm, and is designed so as to enable use as an interchangeable lens or the like. Even though the image circle is large and the back focus BF is long, the effective diameter of the lens L1 that is closest to the object side 11 and has the largest diameter is smaller at 24.4mm, the total system length is also shorter at 47.48mm, and the F number is bright at 3.5, resulting in the optical system 10 as a whole being compact and bright.

The values of the optical system 10 for the conditions (1) to (3) are as follows, with all of the conditions being satisfied.

Condition (1) (R1/f): -1.213
Condition (2) (LA/BF): 1.766
Condition (3) (De1/BF): 0.908

In addition to the first negative lens L1 and the first meniscus lens L2, the first lens group G1 has the first combination lens (in the present embodiment, a cemented lens) C1 that has overall positive refractive power, is disposed facing the aperture stop St, and is composed of two positive and negative lenses L3 and L4. The second lens group G2 has the second combination lens (in the present embodiment, a cemented lens) C2 that has overall positive refractive power, is disposed facing the aperture stop St, and is composed of two negative and positive lenses L5 and L6 disposed so as to be symmetrical with respect to the first combination C1, so that various aberrations including chromatic aberration are favorably corrected.

In addition, in order from the image plane side 12, the second lens group G2 includes the meniscus lens L9 with negative refractive power that is convex on the image plane side 12 and the meniscus lens L8 with negative refractive power that is convex on the object side 11. The combination of the meniscus lenses L8 and L9, which have negative refractive power and are symmetrical with the final lens L9 on the image plane side 12 convex on the image plane side 12 and the adjacent lens L8 convex on the opposite side, is favorable in obtaining a relatively long back focus BF, provides a sufficient number of lens surfaces for correcting aberrations, and is capable of suppressing increases in the Petzval sum. Accordingly, the optical system 10 that obtains favorable aberration correction performance, including curvature of field, is realized. This means that as depicted in FIGS. 3 and 4, the compact optical system 10 with high aberration correction performance is realized.

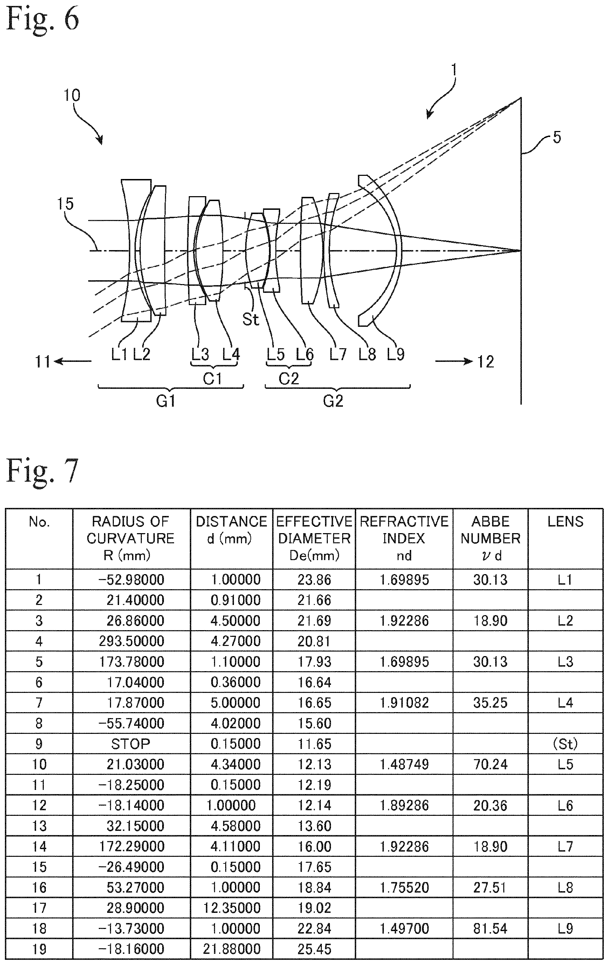

FIG. 6 depicts an example of a camera 1 equipped with a different optical system 10 for image capture. This optical system 10 also consists of a first lens group G1, which has overall positive refractive power and is disposed on the object side 11, and a second lens group G2, which has overall negative refractive power and is disposed on the image plane side 12, with an aperture stop (or simply "stop") St in between. The first lens group G1 consists of four lenses and includes, along the optical axis 15 in order from the object side 11, a biconcave negative lens (first negative lens) L1, a meniscus lens (first meniscus lens) L2 with positive refractive power that is convex on the object side 11, a meniscus lens L3 with negative refractive power that is convex on the object side 11, and a biconvex positive lens L4. The combination (first combination of lenses) C1 of the negative meniscus lens L3 and the positive lens L4 do not form a cemented lens and are proximally disposed with a close to minimal air gap. In the present embodiment, the first lens group G1 is composed of four lenses arranged in a negative, positive, negative, and positive that has retrofocus power arrangements and is suited to a wide-angle system and facilitates achievement of a long back focus.

The second lens group G2 consists of five lenses and includes, along the optical axis 15 in order from the object side 11, a biconvex positive lens L5, a biconcave negative lens L6, a biconvex positive lens L7, a meniscus lens L8 with negative refractive power that is convex on the object side 11, and a meniscus lens L9 with negative refractive power that is convex on the image plane side 12. The combination (second combination of lenses) C2 composed of the positive lens L5 and the negative lens L6 closest to the object side 11 is not a cemented lens and instead has the lenses L5 and L6 disposed with a minimum air gap. The second combination lens C2 has a power arrangement that is symmetrical with the first combination lens C1 with the stop St in between, in the same way as in the embodiment described earlier. In addition, in this example, the second lens group G2 is constructed of five lenses arranged in a positive, negative, positive, negative, negative that has telephoto-type power arrangements. Accordingly, the optical system 10 is constructed of a total of nine lenses with a symmetrical power arrangement on both sides of the stop St and is an optical system which as a whole favorably corrects aberration.

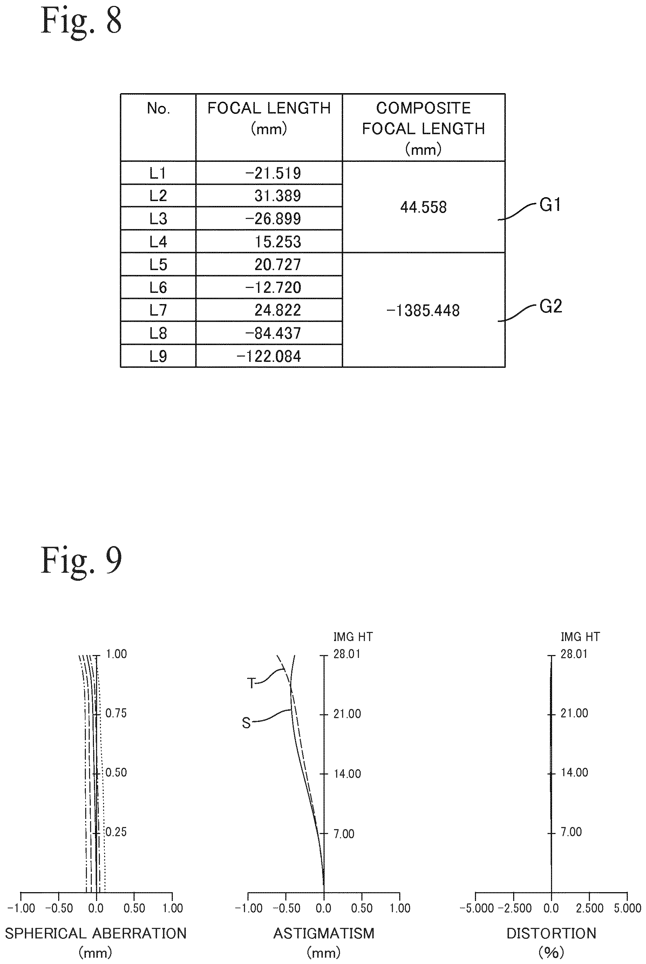

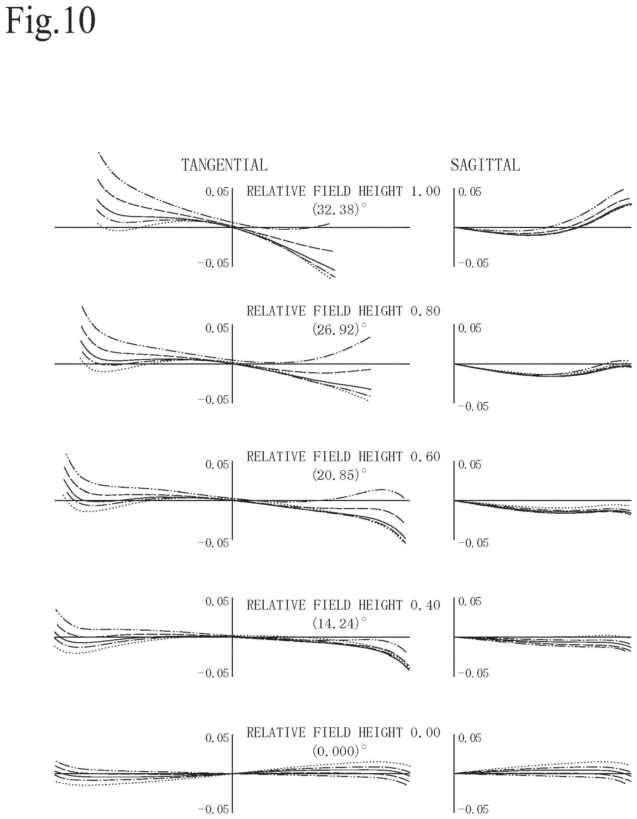

With the optical system 10 also, during focus adjustment (focusing), the entire optical system, that is, the first lens group G1, the aperture stop St, and the second lens group G2 that are disposed in order from the object side 11 integrally move with respect to the image plane 5. FIG. 7 depicts data on the respective lenses that construct the optical system 10. FIG. 8 depicts the (d line) focal length (in mm) of each lens and the composite focal length (in mm) of each lens group. FIG. 9 depicts spherical aberration, astigmatism, and distortion of the optical system 10, and in FIG. 10, chromatic aberration of magnification (or "transverse aberration") of the optical system 10 is separately depicted for tangential rays and sagittal rays at the respective wavelengths given above.

Numerical values indicating the main performance of the optical system 10 are given below.

Overall composite focal length (f): 44.246 mm
F number: 4.0
Maximum angle of view (half-angle): 32.4 degrees
Image circle: φ56 mm
Back focus (BF): 21.88 mm
Overall lens length (LA): 49.99 mm

The fundamental configuration of the image capture optical system 10 is the same as the optical system described earlier, so that there is provided a compact and bright image capture optical system 10 which as a whole is a telephoto-type system, but has a large angle of view and image circle, a comparatively long back focus BF, a short overall length LA, a small lens diameter, and is bright with a low F number. Aberration correction is also favorable.

The values of the optical system 10 for the conditions (1) to (3) are as follows, with all of the conditions being satisfied.

Condition (1) (R1/f): -1.197
Condition (2) (LA/BF): 2.285
Condition (3) (De1/BF): 1.090

In this way, the optical system (lens system) 10 disclosed above relates to image capture optical apparatuses and digital appliances and is a wide-aperture, compact optical system 10 that is suited to an interchangeable lens digital camera, a video camera, a TV camera, an action camera, or the like that captures images of scenery and/or a subject using an image capture element. In particular, it is possible to provide an optical system 10 which is suited to the lens system with a larger image circle for use with a large image capture element 5, which has a simple construction of nine lenses in two groups but achieves the same performance as a range of a standard lens and a wide angle lens, which has a small lens diameter and a short overall lens length LA while having a long back focus BF, and which has favorable aberration correction.

**Claims**

1. An optical system for image capture consisting of a first lens group that has overall positive refractive power and is disposed on an object side with respect to an aperture stop, and a second lens group that has overall negative refractive power and is disposed on an image plane side that is an opposite side to the object side with respect to the aperture stop, wherein the first lens group includes a first negative lens that is concave on the object side and is disposed most toward the object side, and a first meniscus lens with positive refractive power that is convex on the object side and is disposed adjacent to the first negative lens, and a radius of curvature R1 of an object-side surface of the first negative lens and a focal length f of the optical system satisfy a condition below.

$$-1.5 < R1/f < -0.6$$

2. The optical system according to claim 1, wherein the first lens group includes the first negative lens, the first meniscus lens, and a first combination with overall positive refractive power that is disposed facing the aperture stop and composed of two lenses that are positive and negative or negative and positive.

3. The optical system according to claim 2, wherein the second lens group includes a second combination with overall positive refractive power that is disposed facing the aperture stop and composed of two lenses that are negative and positive or positive and negative so as to be symmetrical with the first combination.

4. The optical system according to any one of claims 1 to 3, wherein the second lens group includes, in order from the image plane side, a meniscus lens with negative refractive power that is convex on the image plane side and a meniscus lens with negative refractive power that is convex on the object side.

5. The optical system according to claim 2, wherein the second lens group consists of a second combination that faces the aperture stop and is composed of two lenses that are positive and negative or negative and positive, a lens with positive refractive power that is convex on the image plane side, a meniscus lens with negative refractive power that is convex on the object side, and a meniscus lens with negative refractive power that is convex on the image plane side.

6. The optical system according to any one of claims 1 to 5, wherein during focusing, the first lens group, the aperture stop, and the second lens group integrally move with respect to the image plane without distances between the first lens group, the aperture stop, and the second lens group changing.

7. The optical system according to any one of claims 1 to 6,
   wherein an overall length LA and a back focus BF of the optical system satisfy a condition below.

$$1.5 < LA/BF < 2.5$$

8. The optical system according to any one of claims 1 to 7,
   wherein an effective diameter De1 of the object-side surface of the first negative lens and a back focus BF satisfy a condition below.

$$0.6 < De1/BF < 1.5$$

9. An image capture apparatus comprising:

   the optical system according to any one of claims 1 to 8; and
   an image capture element disposed on the image plane side of the optical system.

# Fig. 1

# Fig. 2

| No. | RADIUS OF CURVATURE R (mm) | DISTANCE d (mm) | EFFECTIVE DIAMETER De(mm) | REFRACTIVE INDEX nd | ABBE NUMBER $\nu$ d | LENS |
|---|---|---|---|---|---|---|
| 1 | −54.60800 | 1.00000 | 24.40 | 1.54814 | 45.78 | L1 |
| 2 | 18.80100 | 2.13000 | 21.50 | | | |
| 3 | 40.82900 | 3.40000 | 21.50 | 1.91650 | 31.60 | L2 |
| 4 | 212.80200 | 6.47000 | 20.80 | | | |
| 5 | 22.50800 | 5.20000 | 17.00 | 1.69700 | 48.52 | L3 |
| 6 | −26.02800 | 1.00000 | 16.60 | 1.69895 | 30.13 | L4 |
| 7 | −52.29800 | 2.92000 | 16.20 | | | |
| 8 | STOP | 5.05000 | 14.20 | | | (St) |
| 9 | −22.88600 | 1.00000 | 13.90 | 1.85026 | 32.27 | L5 |
| 10 | 16.76900 | 5.20000 | 14.90 | 1.64850 | 53.02 | L6 |
| 11 | −26.74000 | 0.93000 | 16.20 | | | |
| 12 | 44.60800 | 4.40000 | 17.60 | 1.85026 | 32.27 | L7 |
| 13 | −51.30000 | 0.15000 | 18.40 | | | |
| 14 | 43.10400 | 1.00000 | 19.00 | 1.83481 | 42.72 | L8 |
| 15 | 22.50000 | 6.63000 | 18.90 | | | |
| 16 | −13.41600 | 1.00000 | 19.20 | 1.48749 | 70.24 | L9 |
| 17 | −21.58300 | 26.88000 | 21.60 | | | |

# Fig. 3

| No. | FOCAL LENGTH (mm) | COMPOSITE FOCAL LENGTH (mm) | COMPOSITE FOCAL LENGTH (mm) | |
|---|---|---|---|---|
| L1 | −25.261 | | | |
| L2 | 54.202 | | 28.87 | G1 |
| L3 | 18.028 | 23.268 (C1) | | |
| L4 | −74.734 | | | |
| L5 | −11.17 | −47.123 (C2) | | G2 |
| L6 | 16.603 | | | |
| L7 | 28.461 | | −71.66 | |
| L8 | −57.436 | | | |
| L9 | −75.523 | | | |

# Fig. 4

SPHERICAL ABERRATION (mm)

ASTIGMATISM (mm)

DISTORTION (%)

Fig. 5

# Fig. 6

# Fig. 7

| No. | RADIUS OF CURVATURE R (mm) | DISTANCE d (mm) | EFFECTIVE DIAMETER De(mm) | REFRACTIVE INDEX nd | ABBE NUMBER ν d | LENS |
|---|---|---|---|---|---|---|
| 1 | −52.98000 | 1.00000 | 23.86 | 1.69895 | 30.13 | L1 |
| 2 | 21.40000 | 0.91000 | 21.66 | | | |
| 3 | 26.86000 | 4.50000 | 21.69 | 1.92286 | 18.90 | L2 |
| 4 | 293.50000 | 4.27000 | 20.81 | | | |
| 5 | 173.78000 | 1.10000 | 17.93 | 1.69895 | 30.13 | L3 |
| 6 | 17.04000 | 0.36000 | 16.64 | | | |
| 7 | 17.87000 | 5.00000 | 16.65 | 1.91082 | 35.25 | L4 |
| 8 | −55.74000 | 4.02000 | 15.60 | | | |
| 9 | STOP | 0.15000 | 11.65 | | | (St) |
| 10 | 21.03000 | 4.34000 | 12.13 | 1.48749 | 70.24 | L5 |
| 11 | −18.25000 | 0.15000 | 12.19 | | | |
| 12 | −18.14000 | 1.00000 | 12.14 | 1.89286 | 20.36 | L6 |
| 13 | 32.15000 | 4.58000 | 13.60 | | | |
| 14 | 172.29000 | 4.11000 | 16.00 | 1.92286 | 18.90 | L7 |
| 15 | −26.49000 | 0.15000 | 17.65 | | | |
| 16 | 53.27000 | 1.00000 | 18.84 | 1.75520 | 27.51 | L8 |
| 17 | 28.90000 | 12.35000 | 19.02 | | | |
| 18 | −13.73000 | 1.00000 | 22.84 | 1.49700 | 81.54 | L9 |
| 19 | −18.16000 | 21.88000 | 25.45 | | | |

# Fig. 8

| No. | FOCAL LENGTH (mm) | COMPOSITE FOCAL LENGTH (mm) | |
|---|---|---|---|
| L1 | −21.519 | | |
| L2 | 31.389 | 44.558 | G1 |
| L3 | −26.899 | | |
| L4 | 15.253 | | |
| L5 | 20.727 | | |
| L6 | −12.720 | | |
| L7 | 24.822 | −1385.448 | G2 |
| L8 | −84.437 | | |
| L9 | −122.084 | | |

# Fig. 9

SPHERICAL ABERRATION (mm)

ASTIGMATISM (mm)

DISTORTION (%)

# Fig.10

TANGENTIAL             SAGITTAL

RELATIVE FIELD HEIGHT 1.00
(32.38)°

RELATIVE FIELD HEIGHT 0.80
(26.92)°

RELATIVE FIELD HEIGHT 0.60
(20.85)°

RELATIVE FIELD HEIGHT 0.40
(14.24)°

RELATIVE FIELD HEIGHT 0.00
(0.000)°

## INTERNATIONAL SEARCH REPORT

International application No.

PCT/JP2017/022755

### A. CLASSIFICATION OF SUBJECT MATTER
G02B13/02(2006.01)i

According to International Patent Classification (IPC) or to both national classification and IPC

### B. FIELDS SEARCHED

Minimum documentation searched (classification system followed by classification symbols)
G02B13/02

Documentation searched other than minimum documentation to the extent that such documents are included in the fields searched

| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2000-321490 A (Cosina Co., Ltd.),<br>24 November 2000 (24.11.2000),<br>3rd example<br>(Family: none) | 1-3,6-9<br>4-5 |
| X<br>A | JP 2-238416 A (Canon Inc.),<br>20 September 1990 (20.09.1990),<br>examples 1 to 4, 6, 8 to 10<br>& US 5289317 A<br>examples 9 to 12, 14, 16 to 17 | 1,4,6-9<br>2-3,5 |
| X<br>A | JP 11-281890 A (Konica Corp.),<br>15 October 1999 (15.10.1999),<br>example 4<br>& US 6185050 B1<br>example 4 | 1,4,6-9<br>2-3,5 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 08 September 2017 (08.09.17) | 19 September 2017 (19.09.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/022755

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 7-253542 A   (Canon Inc.),<br>03 October 1995 (03.10.1995),<br>examples 1 to 6, 8<br>& US 5691851 A<br>examples 33 to 38, 40 | 1-3,6-9<br>4-5 |
| X<br>A | JP 6-067092 A  (Minolta Camera Co., Ltd.),<br>11 March 1994 (11.03.1994),<br>example 5<br>(Family: none) | 1-3,6-9<br>4-5 |
| X<br>A | JP 2001-201683 A  (Olympus Optical Co., Ltd.),<br>27 July 2001 (27.07.2001),<br>examples 3 to 5, 7 to 9<br>& US 2001/0009479 A1<br>examples 3 to 5, 7 to 9 | 1-3,6-9<br>4-5 |
| X<br>A | JP 9-152549 A  (Olympus Optical Co., Ltd.),<br>10 June 1997 (10.06.1997),<br>examples 3 to 4<br>& US 5808812 A<br>examples 3 to 4 | 1-3,6-9<br>4-5 |

Form PCT/ISA/210 (continuation of second sheet) (January 2015)

**REFERENCES CITED IN THE DESCRIPTION**

**Patent documents cited in the description**

- JP 2015194714 A